# EUROPEAN PATENT APPLICATION

(11) **EP 1 826 912 A2**
(43) Date of publication of application: **29.08.2007**
(21) Application number: 07100374.3
(22) Date of filing: 11.01.2007
(51) Int. Cl.: H04B 1/16

(54) **Mobile terminal capable of receiving broadcasting and operating method thereof**

(30) Priority: 22.02.2006 KR 20060017309
(71) Applicant: SAMSUNG ELECTRONICS CO., LTD., Suwon-si, Gyeonggi-do 442-742 (KR)
(72) Inventor: Rhee, Dong-ho, Seoul (KR); Choi, Hyun-seok, Seoul (KR); Kim, Han-sung, 501-1701 Dongbu Apt., Gyeonggi-do (KR)
(74) Representative: Brandon, Paul Laurence

(57) **Abstract**

A mobile terminal which reduces power loss, has improved characteristics for operating in a strong electric field area, and is capable of receiving broadcasting signals such as digital multimedia broadcasting (DMB) signals, includes an antenna module which operates as either a passive antenna or an active antenna, and a control unit which monitors an area where the mobile terminal is used by receiving a signal from the antenna module based on a broadcasting signal received by the antenna module, and controlling an operation of the antenna module based on the monitoring result.

## Description

The present invention relates to mobile terminals capable of receiving broadcast signals and operating methods thereof.

A frequency band used in digital multimedia broadcasting (DMB) is generally a Band III. Band III has a band of about 170-216 MHz. Accordingly, a length of an antenna that can be used in a mobile terminal capable of receiving DMB signals should be 35cm or more, with a reference of λ/4 in order to have efficient antenna characteristics. However, since technological innovation has reduced the weight and size of mobile terminals, the length of the antenna as described above may be critical when designing a mobile terminal. Accordingly, a mobile terminal which uses an active antenna with a short length and has antenna characteristics equivalent or similar to that of a passive antenna, such as a rod antenna or a helical antenna, has been suggested.

The above-suggested mobile terminal which uses an active antenna and is capable of receiving DMB signals must continuously provide a constant voltage to the active antenna in order to obtain a constant antenna gain. This continuous supply of voltage creates a substantial power loss for the mobile terminal. In addition, since the active antenna amplifies a received signal, when the received signal is in the vicinity of a transmission tower where the strength of radio waves are strong, or is in the vicinity of an area with a strong electric field where there is a substantial amount of noise, the strength of a DMB signal received by the mobile terminal may be good, but the maximum input power and far-off selectivity characteristics of the mobile terminal deteriorate. The term "far-off selectivity characteristics" refers to the state of the DMB signal when received by the mobile terminal.

The reason why the far-off selectivity characteristics deteriorate, as described above, is that in the vicinity of a transmission tower where the strength of radio waves are strong, or in the vicinity of a strong electric field area where there is a substantial amount of noise, nearby analog ground wave TV signals generate very strong electric fields and cause the deterioration of far-off selectivity characteristics.

Preferred embodiments of the present invention aim to provide a mobile terminal which reduces power loss, has improved characteristics to operate in a strong electric field area, and is capable of receiving broadcasts, such as digital multimedia broadcasts (DMB), and a method of operating the mobile terminal.

According to an aspect of the present invention, a mobile terminal capable of receiving broadcasts includes an antenna module capable of operating as both a passive antenna and an active antenna, and a control unit which monitors an area where the mobile terminal is used by using a signal generated by the antenna module based on a received broadcast signal, and to control an operation of the antenna module based on the generated signal.

Suitably, the mobile terminal may further include a radio frequency (RF) module to generate a radio frequency auto gain control (RF AGC) signal and an intermediate frequency auto gain control (IF AGC) signal based on the signal outputted from the antenna module, and a baseband module to generate a BER based on the IF AGC signal generated from the RF module, wherein the control unit monitors the area in which the mobile terminal is used by using a monitoring result based on the RF AGC signal and the BER.

Suitably, if the monitoring result indicates that the area in which the mobile terminal is being used is an area with a strong electric field and poor far-off selectivity characteristics, the control unit operates as the passive antenna, and if the monitoring result indicates that the area in which the mobile terminal is being used is an area with a strong electric field and good far-off selectivity characteristics, the control unit controls the antenna module to operate as the active antenna.

According to another aspect of the present invention, a method of receiving broadcasts includes monitoring an area in which a mobile terminal is being used, operating an antenna module of the mobile terminal as a passive antenna if the area in which the mobile terminal is used is an area with a strong electric field and poor far-off selectivity characteristics, and operating the antenna module of the mobile terminal as an active antenna if the area in which the mobile terminal is used is an area with a strong electric field and good selectivity characteristics.

Further features of the present invention are set out in the appended claims.

The present invention will become apparent and more readily appreciated from the following description of the embodiments, taken in conjunction with the accompanying drawings of which:
FIG. 1 is a functional block diagram illustrating a mobile terminal according to an embodiment of the present invention;
FIG. 2A illustrates a signal, received by the mobile terminal shown in FIG. 1, in an area with a weak electric field in which the state of the received signal is poor;
FIG. 2B illustrates a signal, received by the mobile terminal shown in FIG. 1, in an area with a weak electric field in which the state of the received signal by the mobile terminal is good;
FIG. 2C illustrates a signal, received by the mobile terminal shown in FIG. 1, in an area with a strong electric field in which the state of the received signal is good;
FIG. 2D illustrates a signal, received by the mobile terminal shown in FIG. 1, in an area with a strong electric field in which the state of a received signal is poor;
FIG. 3 is a functional block diagram illustrating a mobile terminal according to another embodiment of the present invention;
FIG. 4 is a flowchart illustrating a method of operating a mobile terminal according to an embodiment of the present invention; and
FIG. 5 is a flowchart illustrating a method of operating a mobile terminal according to another embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

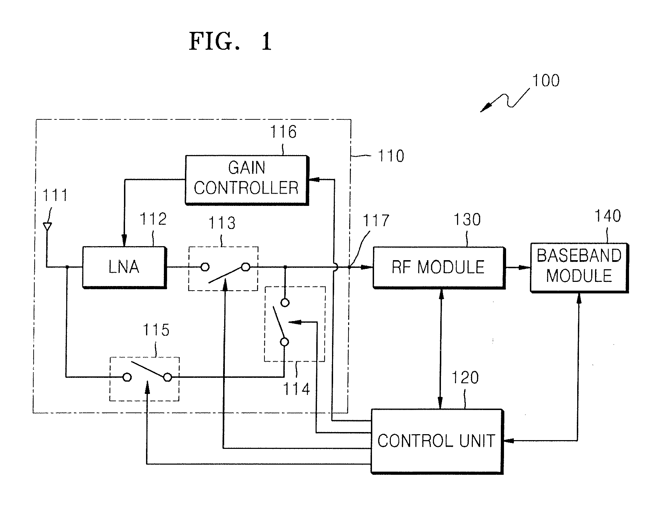

FIG. 1 is a functional block diagram illustrating a mobile terminal 100 according to an embodiment of the present invention. Referring to FIG. 1, the mobile terminal 100 according to an embodiment of the present invention includes an antenna module 110, a control unit 120, a radio frequency (RF) module 130 and a baseband module 140. While not shown, the terminal 100 can include a display and/or audio output to output the received DMB signal. Examples of the terminal 100 include, but are not limited to, mobile phones, portable computers, and portable media devices.

The antenna module 110 is constructed to function as both a passive antenna and an active antenna. To function as both a passive antenna and an active antenna, the antenna module 110 includes an antenna 111, a low noise amplifier (LNA) 112, a plurality of switches 113, 114, and 115, and a gain controller 116. It is understood that the antenna module 110 may be constructed in a different fashion than the construction shown in FIG. 1, and may use different components than the components shown in FIG. 1 in other aspects of the invention.

The LNA 112 amplifies a broadcast signal received by the antenna 111 to a predetermined value. The gain controller 116 is controlled by the control unit 120 and controls an amplification gain of the LNA 112. It is understood that the invention is not limited to receiving DMB signals, any may instead receive may receive other types of signals as well.

The control unit 120 controls the plurality of switches 113, 114 and 115 to connect a path between either the antenna 111 and an output end 117 of the antenna module 110, or a path between the LNA 112 and the output end 117 of the antenna module 110. Specifically, if, the switch 113 is turned on and the remaining switches 114 and 115 are turned off, the output of the LNA 112 is connected to the output end 117 of the antenna module 110 so that the antenna module 110 operates as an active antenna. If the switches 114 and 115 are turned on and the switch 113 is turned off, the antenna 111 is connected to the output end 117 of the antenna module 110 so that the antenna module 110 operates as a passive antenna.

The control unit 120 controls the operation of the antenna module 110 so that during an initial operation of the mobile terminal 100, the antenna module 110 operates as an active antenna. Then, by using signals generated based on a signal received by the antenna module 110, the control unit 120 monitors the area where the mobile terminal 100 is being used. Based on the monitored result, the control unit 120 controls the operation of the antenna module 110 as described below.

According to an embodiment of the present invention, the signals generated based on the signal received by the antenna module 110 include a radio frequency (RF) auto gain control (AGC) signal and a bit error rate (BER). The RF module 130 transmits the RF AGC signal to the control unit 120. The RF module 130 RF receives and amplifies a signal outputted from the antenna module 110. Based on this amplified RF signal, the RF module 130 then generates the RF AGC signal and an intermediate frequency AGC signal (IF AGC) having a baseband signal. The RF AGC signal indicates a low value when the mobile terminal 100 is used in a strong electric field. When the mobile terminal 100 is used in a weak electric field, the RF AGC signal indicates a relatively greater value than the low value indicated in the strong electric field. The RF module 130 transmits the generated RF AGC signal to the control unit 120 and the generated IF AGC signal to the baseband module 140.

Based on the IF AGC signal transmitted from the RF module 130, the baseband module 140 generates the BER. To generate the BER, the baseband module 140 corrects an error which occurs during a process where an RF signal transmitted by a transmitter (not shown) is transferred by using a forward error correction (FEC) process, and then calculates the BER. When the mobile terminal 100 is used in a strong electric field, the BER indicates a very low value. When the mobile terminal 100 is used in a weak electric field, the BER indicates a relatively greater value than the very low value indicated when the mobile terminal 100 is used in the strong electric field. The baseband module 140 transmits the generated BER to the control unit 120.

By using the RF AGC signal and the BER, the control unit 120 monitors an area in which the mobile terminal 100 is used. If the monitoring result indicates that the area in which the mobile terminal 100 is used is an area with a strong electric field and the far-off selectivity characteristics of the area are poor, the control unit 120 controls the antenna module 110 to operate the antenna module 110 as a passive antenna.

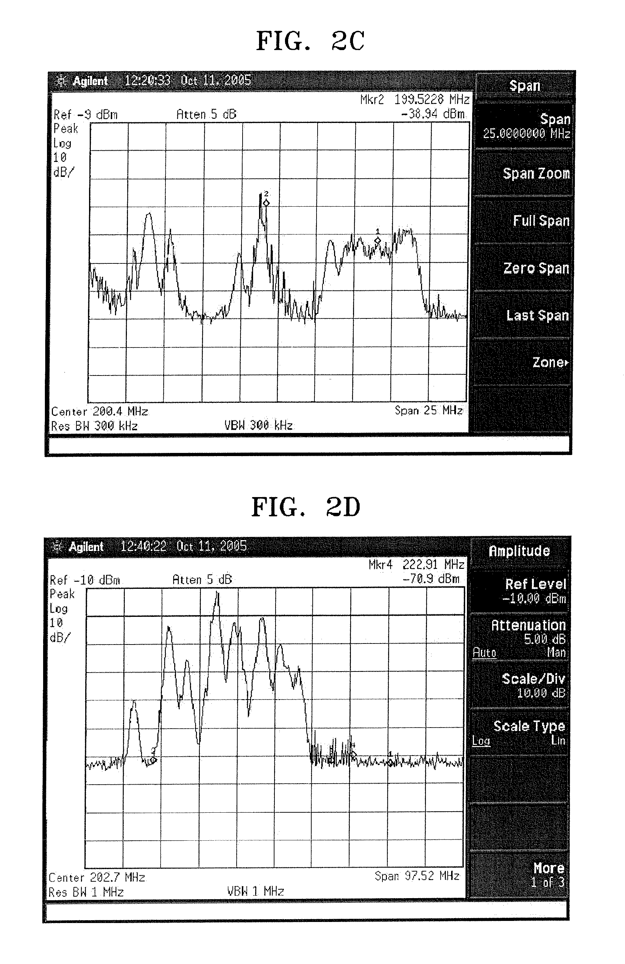

Specifically, if the monitoring result indicates that the RF AGC signal is less than a predetermined value (A) and the BER is less than a predetermined value (B2) (RF AGC < A, BER < B2), the control unit 120 determines that the area in which the mobile terminal 100 is used is an area with a strong electric field and poor far-off selectivity characteristics, as shown in FIG. 2D. The predetermined values A and B2 are the values experimentally obtained with respect to the operational environment. Accordingly, if the monitoring result indicates that the area in which the mobile terminal 100 is used is an area with a strong electric field and poor far-off selectivity characteristics, the control unit 120 turns on the switches 114 and 115 and turns off the switch 113 so that the antenna module 110 operates as a passive antenna.

At this point, when the control unit 120 operates the antenna module 110 as a passive antenna, the control unit 120 controls the gain controller 116 to lower the gain of the LNA 112 to a minimum value, or alternatively turns the LNA 112 off completely, to minimize power consumption.

If the monitoring result indicates that the area in which the mobile terminal 100 is used is not an area with a strong electric field and poor far-off selectivity characteristics, the control unit 120 controls the antenna module 110 to operate the antenna module 110 as an active antenna. Accordingly, the control unit 120 turns on the switch 113 and turns off the switches 114 and 115 in the antenna module 110.

The areas which are not areas with a strong electric field and poor far-off selectivity characteristics may be any of three other types of areas. These areas include an area which has a weak electric field and poor far-off selectivity characteristics (i.e., the state of a signal received by the antenna module 110 is poor); an area which has a weak electric field and good far-off selectivity characteristics (i.e., the state of a signal received by the antenna module 110 is good); and an area with a strong electric field and good far-off selectivity characteristics.

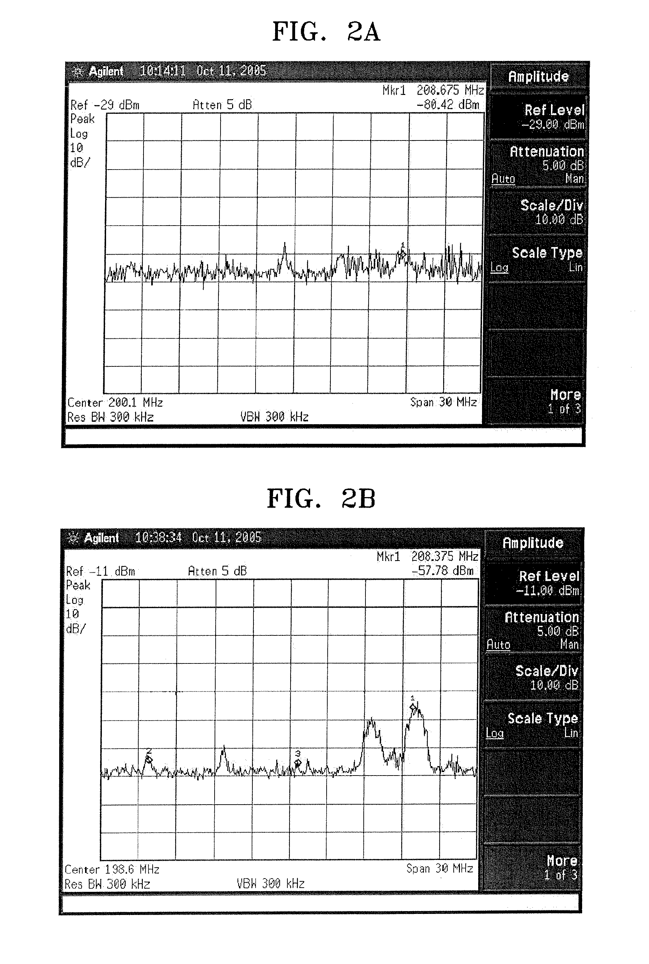

Regarding the first of the three types of areas, if the result of monitoring the RF AGC signal and the BER indicates that the RF AGC signal is equal to or greater than a predetermined value (A) and the BER is equal to or greater than a predetermined value (B2) (RF AGC ≥ A, BER ≥ B2), the control unit 120 determines that the area in which the mobile terminal 100 is used is an area with a weak electric field in which a received signal is weak, as illustrated in FIG. 2A, and the state of the received signal is poor. FIG. 2A illustrates a signal received by the mobile terminal 100 in an area with a weak electric field in which the state of the received signal is poor.

Regarding the second of the three types of areas, if the result of monitoring the RF AGC signal and the BER indicates that the RF AGC signal is equal to or greater than the predetermined value (A) and the BER is less than the predetermined value (B2) (RF AGC ≥ A, BER < B2), the control unit 120 determines that the area in which the mobile terminal 100 is used is an area with a weak electric field in which the state of a received signal is good, as illustrated in FIG. 2B. FIG. 2B illustrates a signal received by the mobile terminal 100 in an area with a weak electric field in which the state of the received signal is good.

Regarding the third of the three types of areas, if the result of monitoring the RF AGC signal and the BER indicates that the RF AGC signal is less than the predetermined value (A) and the BER is equal to or greater than the predetermined value (B2) (RF AGC < A, BER ≥ B2), the control unit 120 determines that the area in which the mobile terminal 100 is used is an area with a strong electric field in which the state of a received signal is good, as illustrated in FIG. 2C. FIG. 2C illustrates a signal received by the mobile terminal 100 according to an embodiment of the present invention in an area with a strong electric field in which the state of the received signal is good.

Referring back to the first of the three types of areas, if the area in which the mobile terminal 100 is used is an area with a weak electric field in which the state of a signal received by the antenna module 100 is poor (in other words, the RF AGC signal is equal to or greater than the predetermined value (A) and the BER is equal to or greater than the predetermined value (B2) (RF AGC ≥ A, BER ≥ B2)), the control unit 120 controls the gain controller 116 in order to increase the gain of the LNA 112 until the BER reaches a predetermined value (B1).

Referring back to the second of the three types of areas, if the area in which the mobile terminal 100 is used is an area with a weak electric field in which the state of a signal received by the antenna module 100 is good (in other words, the RF AGC signal is equal to or greater than the predetermined value (A) and the BER is less than the predetermined value (B2) (RF AGC ≥ A, BER < B2)), the control unit 120 controls the gain controller 116 in order to decrease the gain of the LNA 112 until the BER reaches the predetermined value (B2). The predetermined value B1 of the BER is a value that is experimentally obtained with respect to the operation condition of the mobile terminal 100 in the same way that the predetermined values A and B2 were obtained. Thus, the predetermined value B1 may be experimentally obtained with respect to the operational environment, and possibly other factors as well.

Referring back to the third of the three types of areas, if the area in which the mobile terminal 100 is used is an area with a strong electric field in which the state of a signal received by the antenna module 100 is good (in other words, the RF AGC signal is less than the predetermined value (A) and the BER is equal to or greater than the predetermined value (B2) (RF AGC < A, BER ≥ B2)), the control unit 120 controls the gain controller 116 in order to decrease the gain of the LNA 112 until the BER reaches the predetermined value (B2).

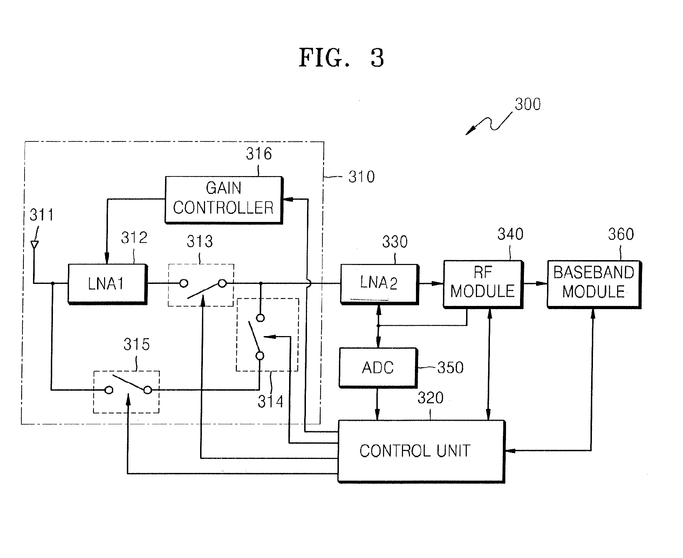

FIG. 3 is a functional block diagram illustrating a mobile terminal 300 according to another embodiment of the present invention. The mobile terminal 300 illustrated in FIG. 3 includes the same components as the mobile terminal 100 illustrated in FIG. 1, and further includes an LNA 2 330 located between an antenna module 310 and an RF module 340, and an analog-to-digital converter (ADC) 350 which converts an analog RF AGC signal outputted from the RF module 340 into a digital signal and transmits the digital signal to a control unit 320.

Accordingly, the antenna module 310 of the mobile terminal 300 illustrated in FIG. 3 has the same structure and operates in the same way as the antenna module 110 of the mobile terminal 100 illustrated in FIG. 1. However, unlike the mobile terminal 100 illustrated in FIG. 1, in the mobile terminal 300 illustrated in FIG. 3, the LNA 1 312 is disposed in the antenna module 310, and the LNA 2 330 ( shown as LAN 2 in FIG. 3) is disposed between the antenna module 310 and the RF module 340. The RF module 340, the baseband module 360, and the control unit 320 illustrated in FIG. 3 have the same structures and operate in the same way as the RF module 130, the baseband module 140, and the control unit 120, respectively, as illustrated in FIG. 1. Additionally, the switches 313, 314, and 315 in FIG. 3 have the same structures and operate the same way as the switches 113, 114 and 115 in FIG. 1, respectively, and the gain controller 316 in FIG. 3 has the same structure and operates the same way as the gain controller 116 in FIG. 1. It is understood, however, that more or less than three switches may be used in accordance with the present invention, and it is further understood that components other than the components shown in FIGS. 1 and 3 may be used.

A signal outputted from the antenna module 310 illustrated in FIG. 3 is transmitted to the LNA 2 330. The LNA 2 330 low-noise amplifies the signal outputted from the antenna module 310 and transmits the low-noise amplified signal to the RF module 340. Then, the amplification gain is controlled by an RF AGC signal outputted from the RF module 340.

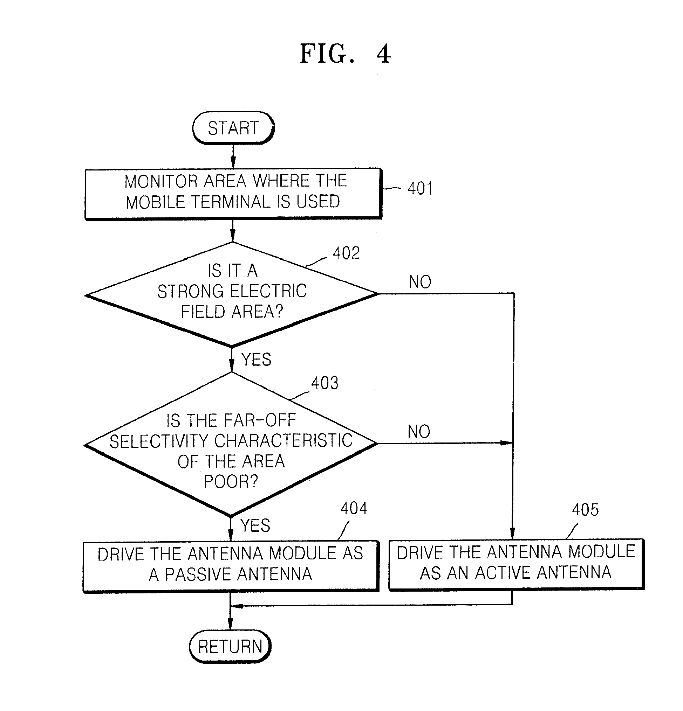

FIG. 4 is a flowchart illustrating a method of operating a mobile terminal according to an embodiment of the present invention. Referring to the mobile terminal 100 illustrated in FIG. 1, the flowchart illustrated in FIG. 4 will be explained below.

First, in operation 401 the control unit 120 of the mobile terminal 100 monitors an area in which the mobile terminal 100 is used. The monitoring is performed using an RF AGC signal and a BER generated based on a received broadcasting signal as described above with reference to FIG. 1.

If the monitoring result indicates that the area in which the mobile terminal 100 is used is an area with a strong electric field and poor far-off selectivity characteristics, the control unit 120 of the mobile terminal 100 operates the antenna module 110 as a passive antenna in operations 402, 403 and 404.

If the monitoring result indicates that the area in which the mobile terminal 100 is used is not an area with a strong electric field and poor far-off selectivity characteristics, the control unit 120 of the mobile terminal 100 operates the antenna module 110 as an active antenna in operations 402, 403, and 405.

As described above with reference to FIG. 1, an area which is not an area with a strong electric field and poor far-off selectivity characteristics may fall into three categories: an area which has a weak electric field and poor selectivity characteristics (i.e., the state of a signal received by the antenna module 110 is poor), an area which has a weak electric field and good far-off selectivity characteristics (i.e., the state of a signal received by the antenna module 110 is good), and an area which has a strong electric field and good far-off selectivity characteristics.

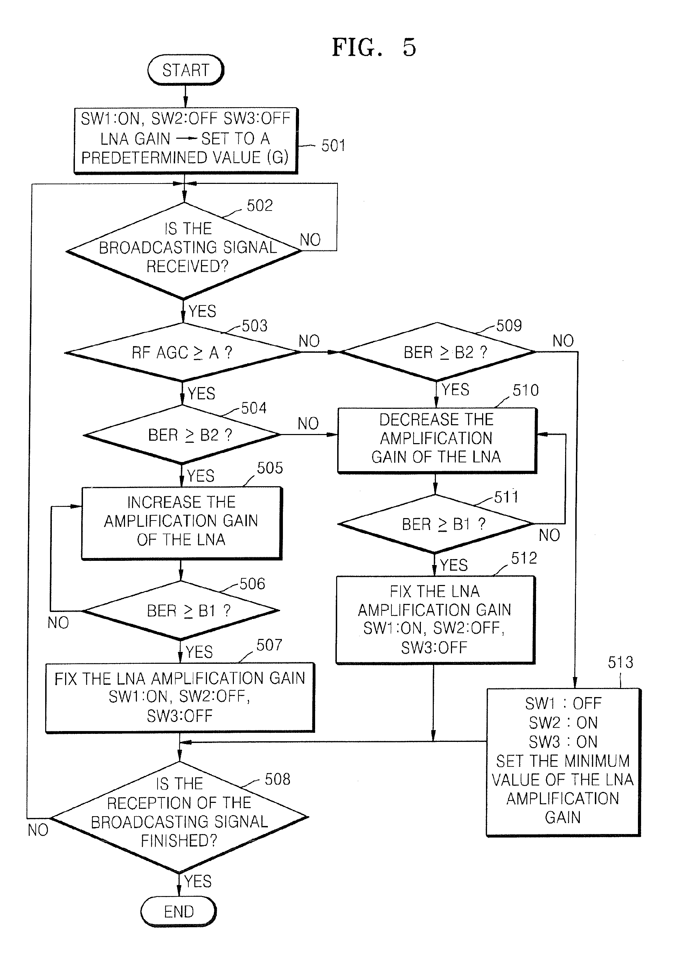

FIG. 5 is a flowchart illustrating a method of operating a mobile terminal according to another embodiment of the present invention. Referring to the mobile terminal 100 illustrated in FIG. 1, the flowchart illustrated in FIG. 5 is explained below.

During the initial operation 501 of the mobile terminal 100, the control unit 120 turns on the switch 113 and turns off the switches 114 and 115 in the antenna module 110, and then sets the gain of the LNA 112 to a predetermined value (G). The predetermined value G is a value experimentally obtained with respect to operation conditions of the mobile terminal 100.

Then, in operation 502 the control unit 120 determines whether the antenna module 110 has received a broadcast signal. If so, then in operation 503, the control unit 120 checks whether an RF AGC signal transmitted from the RF module 130 is equal to or greater than a predetermined value A (RF AGC ≥ A). The predetermined value A may be the same value A as illustrated in FIG. 1.

If the checked result indicates that the RF AGC signal is equal to or greater than the predetermined value A, the control unit 120 checks whether the BER transmitted from the baseband module 140 is equal to or greater than a predetermined value B2 (BER ≥ B2) in operation 504. If the BER is equal to or greater than the predetermined value B2, the control unit 120 determines that the area in which the mobile terminal 100 is used is an area with a weak electric field in which the state of a received signal is poor, as illustrated in FIG. 2A.

Accordingly, when the control unit 120 determines that the area in which the mobile terminal 100 is used is a weak electric field area in which the state of a received signal is poor, in operation 505, the control unit 120 increases the gain of the LNA 112 in the antenna module 110 to a value greater than the predetermined value (G) set in operation 501. By increasing the gain of the LNA 112 in operation 505, the control unit 120 lowers the BER of the wireless environment. After the control unit 120 increases the gain of the LNA 112 in operation 505, the control unit 120 checks whether the BER transmitted from the baseband module 140 is greater than or equal to a predetermined value B1 (BER ≥ B1) in operation 506. If the checked result indicates that the BER is less than the predetermined value B1, the control unit 120 lowers the gain of the LNA 112 until the BER reaches the predetermined value B1.

If the checked result indicates that the BER is greater than or equal to the predetermined value B1, then in operation 507, the control unit 120 fixes the amplification gain of the LNA 112 to the same amplification gain that is set when the BER is greater than or equal to the predetermined value B1, and maintains the on/off states of the switches 113, 114, and 115 in the antenna module 110, as described in operation 501. In other words, the control unit 120 maintains the "on" position of switch 113 and maintains the "off" position of switches 114 and 115. Accordingly, the antenna module 110 operates as an active antenna.

Next, in operation 508, the control unit 120 checks whether the mobile terminal 100 is finished receiving the broadcasting signal. If the mobile terminal 100 is not done receiving the broadcasting signal, the process described above starts again at operation 502. However, if the control unit determines that the mobile terminal 100 is finished receiving the broadcasting signal, the control unit 120 finishes the operation according to the embodiment of the present invention.

Meanwhile, if the control unit 120 determines that the RF AGC signal transmitted from the RF module 130 is equal to or greater than a predetermined value A (RF AGC ≥ A) in operation 503, and further determines that the BER is less than the predetermined value B2 (BER < B2) in operation 504, the control unit 120 determines that the area in which the mobile terminal 100 is used is an area with a weak electric field in which the state of a received signal is good, as illustrated in FIG. 2B.

Accordingly, when the control unit 120 determines that the RF AGC signal transmitted from the RF module 130 is equal to or greater than a predetermined value A in operation 503 and determines that the BER is less than the predetermined value B1 (BER < B1) in operation 504, then, in operation 510 and 511, the control unit 120 decreases the gain of the LNA 112 until the BER reaches the predetermined value B1. If the BER reaches the predetermined value B1, the control unit 120 fixes the gain which is set to the LNA 112 when the BER reaches the predetermined value B1, and maintains the on/off states of the switches 113, 114, and 115 in the antenna module 110 as described in operation 501, that is, the control unit 120 maintains the "on" position of switch 113 and maintains the "off" position of switches 114 and 115. Accordingly, the antenna module 110 operates as an active antenna.

Then, the control unit 120 performs operation 508, as described above. Specifically, the control unit 120 checks whether the mobile terminal 100 is finished receiving the broadcasting signal. If the mobile terminal 100 is not done receiving the broadcasting signal, the process described above starts again at operation 502. However, if the control unit determines that the mobile terminal 100 is finished receiving the broadcasting signal, the control unit 120 finishes the operation according to the embodiment of the present invention.

Also, if the control unit 120 determines that the RF AGC signal is less than the predetermined value A (RF AGC < A) in operation 503, the control unit 120 then checks whether the BER is greater than or equal to the predetermined value B2 (BER ≥ B2) in operation 509. If the control unit 120 determines in operation 509 that the BER is greater than or equal to the predetermined value B2, the control unit 120 therefore determines that the area in which the mobile terminal 100 is used is an area with a strong electric field in which the state of a received signal is good, as illustrated in FIG. 2C.

Accordingly, the control unit 120 performs operations 510 through 512, and then performs operation 508. As a result of performing operations 510 through 512 and then operation 508, the antenna module 110 operates as an active antenna.

If the control unit 120 determines in operation 509 that the BER is less than the predetermined value B2, the control unit 120 therefore determines that the area in which the mobile terminal 100 is used is an area with a strong electric field and poor far-off selectivity characteristics, as shown in FIG. 2D, and performs operation 513.

In operation 513, the control unit 120 changes the on/off states of each of the switches 113, 114, and 115 in the antenna module 110 to the opposite states of the switches in operation 501. Specifically, the control unit 120 turns the switch 113 off and the switches 114 and 115 on. Accordingly, the antenna module 110 operates as a passive antenna. As the control unit 120 changes the on/off states of each of the switches 113, 114, and 115, the control unit 120 may set the amplification gain value of the LNA 112 in the antenna module 110 to a minimum value to reduce power consumption in the mobile terminal 100. This minimum value may be experimentally obtained.

Additionally, in operation 513, the control unit 120 may turn off the LNA 112 completely, in order to further reduce power consumption in the mobile terminal 100. It is understood that a user may determine how the control unit 120 controls the LNA 112.

Predetermined values A, B1, and B2 described in FIG. 5 are the same values as predetermined values A, B1, and B2, respectively, as described in FIG. 1. It is understood that the predetermined values of A, B1, and B2 are values which are experimentally obtained, and may fall within a wide range of values.

A program to execute a method of operating a mobile terminal capable of receiving broadcast signals according to embodiments of the present invention may also be embodied as computer readable codes on a computer readable recording medium. The computer readable recording medium may be any data storage device that can store data which can thereafter be read by a computer system. Examples of a computer readable recording media include, but are not limited to, a read-only memory (ROM), a random-access memory (RAM), a CD-ROM, a magnetic tape, a floppy disk, an optical data storage device, and carrier waves (such as data transmission through the Internet). The computer readable recording medium may also be distributed over network-coupled computer systems so that the computer readable code may be stored and executed in a distributed fashion.

According to preferred embodiments of the present invention as described above, the power loss caused by providing a constant voltage to an active antenna in a mobile terminal is reduced, regardless of whether an area in which the mobile terminal receives DMB signals is an area with a strong or weak electric field. Preferred embodiments of the present invention further provide a mobile terminal with improved operational characteristics, such as improved maximum input power and improved far-off selectivity, even when the mobile terminal is used in an area with a strong electric field area and poor far-off selectivity characteristics.

While the present invention has been particularly shown and described with reference to exemplary embodiments thereof, it will be understood by those of ordinary skill in the art that various changes in form and details may be made therein without departing from the spirit and scope of the present invention as defined by the following claims. The preferred embodiments should be considered in a descriptive sense only, and not for purposes of limitation. Therefore, the scope of the invention is defined not by the detailed description of the invention but by the appended claims, and all differences within the scope will be construed as being included in the present invention. While described in the context of DMB, it is understood that aspects of the invention can be used with other broadcast signals.

Although a few embodiments of the present invention have been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mobile terminal (100, 300)capable of receiving broadcast signals, comprising:
an antenna module (110, 310) selectable between a passive antenna (111, 311) and an active antenna (111, 311); and
a control unit (120, 320) to monitor an area where the mobile terminal is used by using a signal generated based on a received broadcast signal, and to control an operation of the antenna module based on the generated signal to select between the passive antenna and active antenna.

2. The mobile terminal (100, 300) of claim 1, wherein the signal generated based on the signal received by the antenna module (110, 310) comprises:
a radio frequency auto gain control (RF AGC) signal; and
a bit error rate (BER).

3. The mobile terminal (100, 300) of claim 1 or claim 2, further comprising:
a radio frequency (RF) module (130, 340) to generate a radio frequency auto gain control (RF AGC) signal and an intermediate frequency auto gain control (IF AGC) signal based on the signal outputted from the antenna module; and
a baseband module (140, 360) to generate a bit error rate (BER) based on the IF AGC signal generated from the RF module,
wherein the control unit (120, 320) monitors the area in which the mobile terminal is used by using a monitoring result based on the RF AGC signal and the BER.

4. The mobile terminal (100, 300) of claim 3, wherein
if the monitoring result indicates that the area in which the mobile terminal is used is an area with a strong electric field and poor far-off selectivity characteristics, the control unit (120, 320) operates the antenna module (110, 310) to select the passive antenna (111, 311), and
if the monitoring result indicates that the area in which the mobile terminal is used is not the area with a strong electric field and poor far-off selectivity characteristics, the control unit operates the antenna module to select the active antenna (111, 311).

5. The mobile terminal (100, 300) of claim 3 and claim 4, wherein the antenna module (110, 310) comprises:
an antenna (111, 311) to receive the broadcast signal;
a first low noise amplifier (112, 312) to low noise amplify the received broadcast signal;
a gain controller (116, 316) controlled by the control unit to control an amplification gain of the first low noise amplifier; and
a plurality of switches (113, 114, 115, 313, 314, 315) which, if the area in which the mobile terminal is used is an area with a strong electric field and poor far-off selectivity characteristics, is controlled by the control unit in order to connect a path between the antenna and an output terminal of the antenna module so that the antenna module operates as the passive antenna, and if the area in which the mobile terminal is used is not the area with a strong electric field and poor far-off selectivity characteristics, is controlled by the control unit in order to connect a path between the first low noise amplifier and the output terminal of the antenna module so that the antenna module operates as the active antenna.

6. The mobile terminal (300) of claim 5, further comprising:
a second low noise amplifier (330) low noise to low noise amplify the signal generated by the antenna module (310), and to transmit the amplified signal to the RF module (340),
wherein an amplification gain of the second low noise amplifier is controlled by the RF AGC signal outputted from the RF module.

7. The mobile terminal (100, 300) of claim 5 or claim 6, wherein
if the area in which the mobile terminal is used is an area with a weak electric field and poor far-off selectivity characteristics, the control unit (120, 320) increases the gain of the first low noise amplifier (112, 312) until the BER reaches a predetermined value, and
if the area in which the mobile terminal is used is an area with a weak electric field and good far-off selectivity characteristics or an area with a strong electric field and good far-off selectivity characteristics, the control unit decreases the gain of the first low noise amplifier (112, 312) until the BER reaches the predetermined value.

8. The mobile terminal (100, 300) of any one of claims 5-7, wherein if the area in which the mobile terminal is used is the area with a strong electric field and poor far-off selectivity characteristics, the control unit (120, 320) controls the gain controller (116, 316) so that the amplification gain of the first low noise amplifier (112, 312) becomes a minimum value.

9. The mobile terminal (100, 300) of any one of claims 5-8, wherein if the area in which the mobile terminal is used is the area with a strong electric field and poor far-off selectivity characteristics, the control unit (120, 320) controls the gain controller (116, 316) so that the first low noise amplifier (112, 312) is turned off.

10. The mobile terminal (100, 300) of claim 3, further comprising a low noise amplifier (112, 312) to low noise amplify the signal generated by the antenna module and to transmit the low noise amplified signal to the RF module,
wherein an amplification gain of the low noise amplifier is controlled by the RF AGC signal outputted from the RF module.

11. The mobile terminal (100, 300) of claim 2, wherein if the monitoring result indicates that the area in which the mobile terminal is used is an area with a strong electric field and poor far-off selectivity characteristics, the control unit (120, 320) operates the antenna module (110, 310) operates as the passive antenna, and
if the monitoring result indicates that the area in which the mobile terminal is used is an area with a strong electric field area and good far-off selectivity characteristics, the control unit operates the antenna module as the active antenna.

12. The mobile terminal (100, 300) of any preceding claim, wherein the broadcast signal comprises a digital multimedia broadcast (DMB) signal.

13. The mobile terminal (100, 300) of claim 1, further comprising
a radio frequency (RF) module (130, 340) to generate an RF AGC signal corresponding to a strength of an electric field in an area where the mobile terminal is used;
a baseband module (140, 360) to generate a bit error rate (BER) value corresponding to a state of the received broadcast signal;
a low noise amplifier (LNA) (112, 312) to selectively low noise amplify the received broadcast signal when received through the active antenna; and
wherein the control unit selects to operate the antenna module as the passive antenna when:
the RF AGC signal < A, and
the BER value < B2, and A and B2 are predetermined values,
and otherwise, selects to operate the antenna module as the active antenna.

14. The mobile terminal (100, 300) of claim 13, wherein if:
the RF AGC signal ≥ A, and
the BER ≥ B2, the control (120, 320) unit selects to operate the antenna module (110, 310) as the active antenna and increases an amplification gain of the LNA (112, 312) until the BER ≥ B1, wherein B1 is a predetermined value.

15. The mobile terminal (100, 300) of claim 14, wherein if:
the RF AGC signal ≥ A, and
the BER < B2, the control unit (120, 320) selects to operate the antenna module as the active antenna and decreases the amplification gain of the LNA (112, 312) until the BER ≥ B1.

16. The mobile terminal (100, 300) of claim 15, wherein if:
the RF AGC signal < A, and
the BER ≥ B2, the control unit (120, 320) selects to operate the antenna module (110, 310) as the active
antenna and decreases the amplification gain of the LNA (112, 312) until the BER ≥ B1.

17. The mobile terminal (100, 300) of claim 16, wherein if:
the RF AGC < A, and
the BER < B2, the control unit (120, 320) selects to operate the antenna module (110, 310) as the passive
antenna and sets the amplification gain of the LNA (112, 312) to a minimum value.

18. The mobile terminal (100, 300) of claim 16, wherein if:
RF AGC < A, and
BER < B2, the control unit selects to operate the antenna module as the passive
antenna and turns the LNA off.

19. A method of receiving a broadcast signal, the method comprising:
monitoring an area in which a mobile terminal (100, 300) is used;
operating an antenna module (110, 310) of the mobile terminal as a passive antenna if the area in which the mobile terminal is used is an area with a strong electric field and poor far-off selectivity characteristics; and
operating the antenna module of the mobile terminal as an active antenna if the area in which the mobile terminal is used is not the area with a strong electric field and poor far-off selectivity characteristics.

20. The method of claim 19, wherein the monitoring of the area is performed using an RF AGC signal and a BER generated based on the broadcast signal received by the antenna module (110, 310).

21. The method of claim 20, wherein the operating of the antenna module (110, 310) as the active antenna comprises:
increasing an amplification gain of a first low noise amplifier (112, 312) until the BER reaches a predetermined value if the area in which the mobile terminal is used is an area with a weak electric field and poor selectivity characteristics; and
decreasing the amplification gain of the first low noise amplifier until the BER reaches the predetermined value if the area in which the mobile terminal is used is an area with a strong electric field and good far-off selectivity characteristics or is an area with a weak electric field and good far-off selectivity characteristics.

22. The method of claim 21, further comprising repeatedly performing the operations of the method until reception of the broadcast signal is finished.

23. The method of any one of claims 19-22, further comprising repeatedly performing the operations of the method until reception of the broadcast signal is finished.

24. The method of any one of claims 19-23, wherein the broadcast signal comprises a digital multimedia broadcast (DMB) signal.
